# EUROPEAN PATENT APPLICATION

(11) **EP 1 605 332 A2**
(43) Date of publication of application: **14.12.2005**
(21) Application number: 05104382.6
(22) Date of filing: 24.05.2005
(51) Int. Cl.: G06F 1/00

(54) **Managing spyware and unwanted software through auto-start extensibility points**

(30) Priority: 28.09.2004 US 952336; 28.05.2004 US 575322 P
(71) Applicant: MICROSOFT CORPORATION, Redmond, WA 98052 (US)
(72) Inventor: Johnson, Aaron R., Redmond, WA 98052 (US); Verbowski, Chad E., Redmond, WA 98052 (US); Roussev, Roussi A., Redmond, WA 98052 (US); Wang, Yi-Min, Redmond, WA 98052 (US)
(74) Representative: Grünecker, Kinkeldey, Stockmair & Schwanhäusser Anwaltssozietät

(57) **Abstract**

A monitoring service is provided that detects spyware or other unwanted software at the time it is installed and/or allows for the spyware's removal. The service monitors "Auto-Start Extensibility Points" ("ASEPs") to detect spyware installations. ASEPs refer to the configuration points that can be "hooked" to allow programs to be auto-started without explicit user invocation. Such a service is particularly effective because an overwhelming majority of spyware programs infect systems in such a way that they are automatically started upon reboot and the launch of many commonly used applications. The monitoring service can thus lead to the subsequent complete removal of the spyware installation, and does not require a frequent signature-based cleaning. Spyware that is bundled with other software such as freeware or shareware can also be removed.

## Description

### CROSS-REFERENCE TO RELATED APPLICATION

The present application claims the benefit of Wang et al., U.S. Provisional Patent Application No. 60/575,322 entitled, "MANAGING SPYWARE AND RELATED APPLICATIONS", filed on May 28, 2004, which is hereby incorporated by reference in its entirety.

### FIELD OF THE INVENTION

This invention pertains generally to the field of computer software and operating systems and more particularly to identifying unwanted software on a computer system.

### BACKGROUND OF THE INVENTION

Spyware is a generic term referring to a class of software programs that track and report computer users' behavior for marketing or illegal purposes. More generally, spyware is a type of software that is downloaded and installed on a user's machine without the user's knowledge and/or consent. Such unwanted software may, for example, actively push advertisements to the user by popping up windows, change the Web browser start page, search page, and modify bookmark settings. Spyware often silently communicates with servers over the Internet to report collected user information, and may also receive commands to install additional software on the user's machine. Users whose machines are infected with spyware commonly experience severely degraded reliability and performance such as increased boot time, sluggish feel, and frequent application crashes. Reliability data shows that spyware programs account for fifty percent of the overall crash reports. Vulnerabilities in spyware programs further have been shown to cause security problems. A recent study based on scanning more than one million machines show the alarming prevalence of spyware: an average of four to five spyware programs (excluding Web browser cookies) were running on each computer.

Existing anti-spyware solutions are primarily based on the signature approach, as commonly used by antivirus software: each spyware installation is investigated to determine its file and Registry signatures for use by scanner software to later detect spyware instances. This approach has several problems.

First, many spyware programs may be considered "legitimate" in the following sense: their companies sponsor popular freeware to leverage their installation base; since users agree to an End User Licensing Agreement (EULA) when they install freeware, removing the bundled spyware may violate this agreement. In many cases, the freeware ensures the spyware is running on the user's system by refusing to run if its bundled spyware is removed.

Second, the effectiveness relies on completeness of the signature database for known spyware. Beyond the difficulty of manually locating and cataloging new spyware, this approach is further complicated because spyware are full-fledged applications that are generally much more powerful than the average virus, and can actively take measures to avoid detection and removal. Companies creating spyware generate revenue based on the prevalence of their applications and therefore have a financial incentive to create technologies that make it hard to detect and remove their software. They have the need and the resources to invest in developing sophisticated morphing behavior.

Third, some spyware installations may contain common library files that non-spyware applications use. If care is not taken to remove these files from the spyware signatures, scanners using these signatures may break non-spyware applications.

Finally, popular spyware removal programs are commonly invoked on-demand or periodically, long after the spyware installation. This allows the spyware to collect private information and makes it difficult to determine when the spyware was installed and where it came from.

### BRIEF SUMMARY OF THE INVENTION

A monitoring service is provided that detects and/or removes spyware or other unwanted software at the time it is installed. The service monitors "Auto-Start Extensibility Points" ("ASEPs") to detect spyware installations. ASEPs refer to the configuration points that can be "hooked " to allow programs to be auto-started without explicit user invocation. Such a service is particularly effective because an overwhelming majority of spyware programs infect systems in such a way that they are automatically started upon reboot and the launch of many commonly used applications. The monitoring service can thus lead to the subsequent complete removal of the spyware installation, and does not require a frequent signature-based cleaning. Unlike signature-based approaches, the monitoring service detects new or unknown spyware that does not yet have a known signature.

In one aspect, a method is provided for identifying potential unwanted software, the method comprising monitoring a plurality of auto-start extensibility points (ASEPs) for ASEP-hook related activity, and detecting an unwanted software application through ASEP-hook related activity.

In another aspect, a user interface is provided for assisting a computing device user with removal of unwanted software, the user interface comprising a list of user-selectable items including auto-start executable files installed on the user's computing device, wherein, if an executable file in the list was installed as part of a bundle of executable files deriving from a common installation, the list displays information regarding the bundle.

In still another aspect, a method is provided for discovering auto-start extensibility points (ASEPs) in software of a computing device, the method comprising executing an auto-start trace, and detecting at least one previously unknown ASEP in the auto-start trace.

In yet another aspect, a computer-readable medium including computer-executable instructions is provided for facilitating the identifying of potential unwanted software, the computer-executable instructions performing the steps of monitoring a plurality of auto-start extensibility points (ASEPs) for ASEP-hook related activity, and detecting an unwanted software application through ASEP-hook related activity.

In one more aspect, a computer-readable medium including computer-executable instructions is provided for facilitating the discovering of auto-start extensibility points (ASEPs) in software of a computing device, the computer-executable instructions performing the steps of storing at a first checkpoint a list of ASEP hooks known to exist on the computing device at the time of the first checkpoint's creation, storing at a second checkpoint a list of ASEP hooks known to exist on the computing device at the time of the second checkpoint's creation, and detecting at least one ASEP in the second checkpoint that is not in the first checkpoint.

### BRIEF DESCRIPTION OF THE DRAWINGS

While the appended claims set forth the features of the present invention with particularity, the invention and its advantages are best understood from the following detailed description taken in conjunction with the accompanying drawings, of which:

Figure 1 is a simplified schematic illustrating an exemplary architecture of a computing device for carrying out spyware and unwanted software detection and management, in accordance with an embodiment of the invention;

Figure 2 is an illustration of a computer operating system as a series of gates, in accordance with an embodiment of the invention;

Figure 3 is an illustration of a component architecture used for spyware detection and removal, in accordance with an embodiment of the invention;

Figure 4 is an illustration depicting a method of spyware management, in accordance with an embodiment of the invention;

Figure 5 is a diagram illustrating several categories of auto-start extensibility points, in accordance with an embodiment of the invention;

Figure 6 is an illustration of a user notification alert for spyware management, in accordance with an embodiment of the invention;

Figure 7 is a diagram illustrating an example of the installation of software bundles and ASEP hooks, in accordance with an embodiment of the invention;

Figure 8 is a simplified flow diagram illustrating a method of bundle management, in accordance with an embodiment of the invention;

Figure 9 is an illustration of a user interface for removing and managing bundled spyware, in accordance with an embodiment of the invention; and

Figures 10 and 11 are illustrations of a troubleshooting tool being used for spyware management, in accordance with an embodiment of the invention.

### DETAILED DESCRIPTION OF THE INVENTION

The methods and systems to manage spyware through auto-start extensibility points will now be described with respect to preferred embodiments; however, the methods and systems of the present invention are not limited managing spyware through auto-start extensibility points. Moreover, the skilled artisan will readily appreciate that the methods and systems described herein are merely exemplary and that variations can be made without departing from the spirit and scope of the invention.

The present invention will be more completely understood through the following detailed description, which should be read in conjunction with the attached drawings. In this description, like numbers refer to similar elements within various embodiments of the present invention.

The invention is illustrated as being implemented in a suitable computing environment. Although not required, the invention will be described in the general context of computer-executable instructions, such as procedures, being executed by a personal computer. Generally, procedures include program modules, routines, functions, programs, objects, components, data structures, etc. that perform particular tasks or implement particular abstract data types. Moreover, those skilled in the art will appreciate that the invention may be practiced with other computer system configurations, including hand-held devices, multi-processor systems, microprocessor based or programmable consumer electronics, network PCs, minicomputers, mainframe computers, and the like. The invention may also be practiced in distributed computing environments where tasks are performed by remote processing devices that are linked through a communications network. In a distributed computing environment, program modules may be located in both local and remote memory storage devices. The term computer system may be used to refer to a system of computers such as may be found in a distributed computing environment.

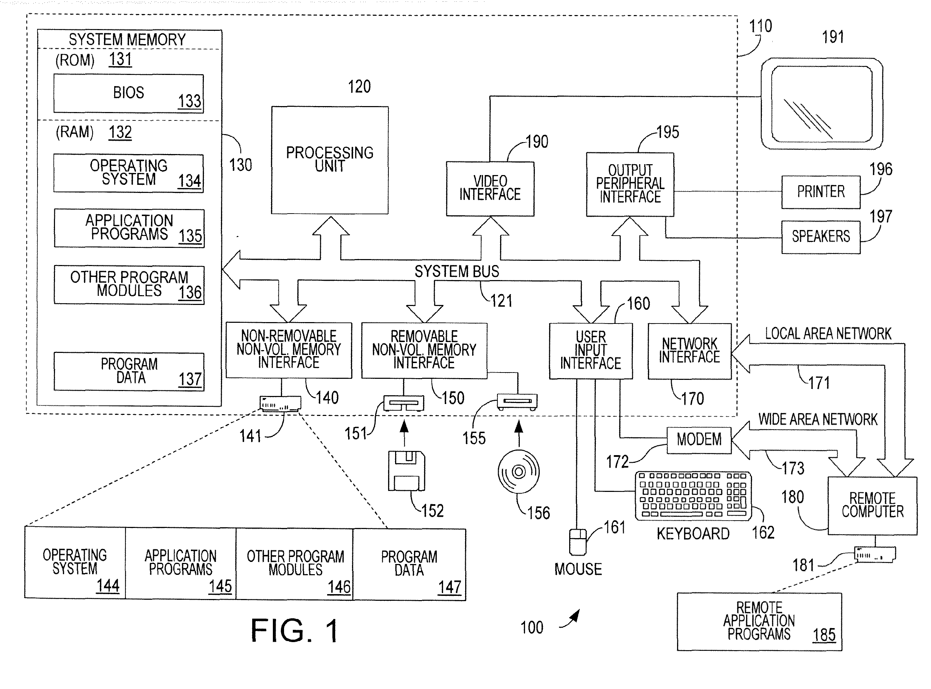

**Figure 1** illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100. Although one embodiment of the invention does include each component illustrated in the exemplary operating environment 100, another more typical embodiment of the invention excludes non-essential components, for example, input/output devices other than those required for network communications.

With reference to Figure 1, an exemplary system for implementing the invention includes a general purpose computing device in the form of a computer 110. Components of the computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

The computer 110 typically includes a variety of computer readable media. Computer readable media can be any available media that can be accessed by the computer 110 and includes both volatile and nonvolatile media, and removable and non-removable media. By way of example, and not limitation, computer readable media may comprise computer storage media and communication media. Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by the computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Figure 1 illustrates operating system 134, application programs 135, other program modules 136 and program data 137.

The computer 110 may also include other removable/non-removable, volatile/nonvolatile computer storage media. By way of example only, Figure 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media, discussed above and illustrated in Figure 1, provide storage of computer readable instructions, data structures, program modules and other data for the computer 110. In Figure 1, for example, hard disk drive 141 is illustrated as storing operating system 144, application programs 145, other program modules 146 and program data 147. Note that these components can either be the same as or different from operating system 134, application programs 135, other program modules 136, and program data 137. Operating system 144, application programs 145, other program modules 146, and program data 147 are given different numbers hereto illustrate that, at a minimum, they are different copies. A user may enter commands and information into the computer 110 through input devices such as a tablet, or electronic digitizer, 164, a microphone 163, a keyboard 162 and pointing device 161, commonly referred to as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. The monitor 191 may also be integrated with a touch-screen panel or the like. Note that the monitor and/or touch screen panel can be physically coupled to a housing in which the computing device 110 is incorporated, such as in a tablet-type personal computer. In addition, computers such as the computing device 110 may also include other peripheral output devices such as speakers 197 and printer 196, which may be connected through an output peripheral interface 194 or the like.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Figure 1. The logical connections depicted in Figure 1 include a local area network (LAN) 171 and a wide area network (WAN) 173, but may also include other networks. Such networking environments are commonplace in offices, enterprise-wide computer networks, intranets and the Internet. For example, in the present invention, the computer 110 may comprise the source machine from which data is being migrated, and the remote computer 180 may comprise the destination machine. Note however that source and destination machines need not be connected by a network or any other means, but instead, data may be migrated via any media capable of being written by the source platform and read by the destination platform or platforms.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160 or other appropriate mechanism. In a networked environment, program modules depicted relative to the computer 110, or portions thereof, may be stored in the remote memory storage device. By way of example, and not limitation, Figure 1 illustrates remote application programs 185 as residing on memory device 181. It will be appreciated that the network connections shown are exemplary and other means of establishing a communications link between the computers may be used.

In a typical networked environment, the computer 110 receives data files and executable files transmitted from the remote computer 180 over a communications network such as the Internet. Receiving, or "downloading", is caused either automatically by programs currently executing on the computer 110, or manually through, for example, a user directing a web browser to a particular uniform resource locator (URL). Some executable files downloaded onto the computer 110 may, unbeknownst to the user, monitor the user's behavior with respect to the computer 110. Other executable files downloaded onto the computer 110 may cause such monitoring programs to be installed and/or executed, again without the knowledge of the user. Such monitoring programs are generally referred to as "spyware."

Embodiments of the invention monitor ASEPs to detect spyware installations. Generally, an "auto-start" software program is one that either automatically begins execution without user intervention (e.g., the WINDOWS EXPLORER program in the MICROSOFT WINDOWS operating system), or is very commonly run by users (e.g., an intemet web browser program). ASEPs can be viewed in two ways: as "hooks" (i.e., extensions) to existing auto-start software applications; or as standalone software applications that are registered as operating system auto-start extensions, such as a NT service in the MICROSOFT WINDOWS operating system, or as a daemon in the UNIX OS.

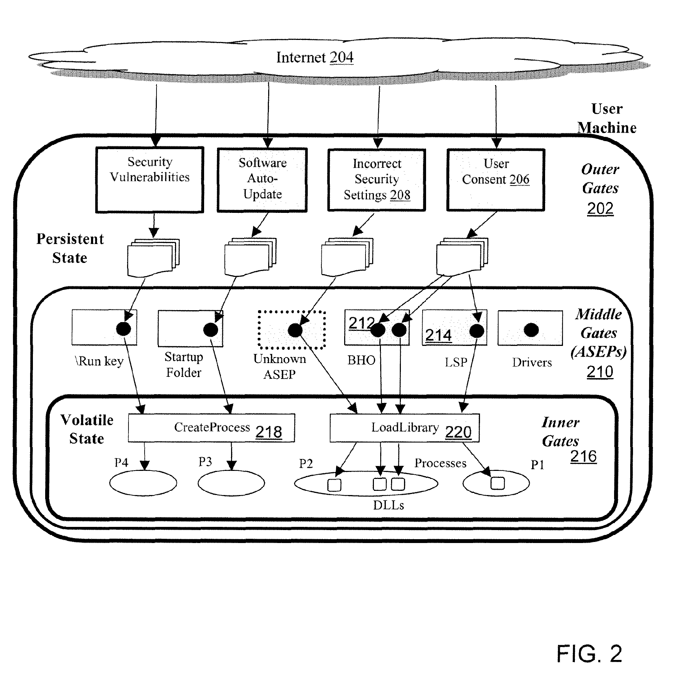

**Figure 2** depicts a computer operating system as sets of gates, in accordance with an embodiment of the invention. The Outer Gates 202 are the entrance points for program files from the Internet 204 to get on user machines. User Consent 206 includes not only explicit consent to install, (e.g., a freeware program), but also implicit consent to allow spyware programs to be installed when they are bundled with the freeware. Incorrect Security Settings 208 include a "Low" user-setting for Internet Zone security, incorrect entries in a list of trusted sites, and incorrect entries in a list of trusted publishers, which would allow "drive-by" downloads (i.e., controls are downloaded and installed on the user's machine without explicit consent). The Middle Gates 210 are ASEPs that allow programs to hook a system to essentially become "part of the system" from a user's point of view. The Middle Gates 210 allow programs to survive reboots, thus maximizing their chances of running constantly on the user's machine. Examples of known types of common ASEPs include Browser Helper Objects (BHOs) 212 and Layered Service Providers (LSPs) 214. The Inner Gates 216 control the instantiation of program files into active running program instances. In the MICROSOFT WINDOWS operating system, they include CreateProcess 218, LoadLibrary 220, and other program execution mechanisms, and are used to block any potentially harmful programs if they are not on a "known-good" list. An ASEP monitoring service, as used in an embodiment of the invention, identifies and monitors the Middle Gates 210 and exposes all ASEP hooks. The ASEPs are exposed in a user-friendly way to allow effective management of spyware.

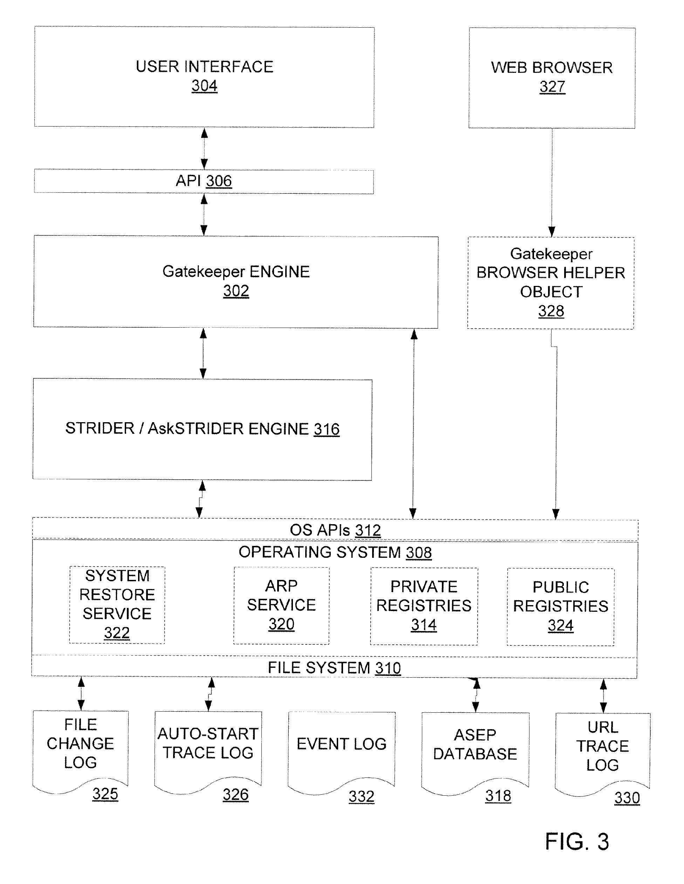

In an embodiment of the invention, a software tool, called "Gatekeeper", is used to help users identify and remove spyware and potential spyware from their systems. A component architecture in which the tool preferably operates is shown in **Figure 3**. A Gatekeeper software engine 302 performs several functions to detect spyware and potential spyware through known and unknown ASEPs. A user interface 304 allows a user to interact with the Gatekeeper engine 302, preferably through intermediary calls to an application programming interface (API) 306. The user interface 304 may be a standalone application, a web-based control, a command-line interface, system control panel, etc. The API 306 further permits other applications to access the functionality of the Gatekeeper engine 302. The Gatekeeper engine 302 operates by gathering information from the operating system 308 and from data files accessed via the file system 310. The Gatekeeper engine 302 communicates with the operating system 308 through several public OS APIs 312 or by directly accessing private OS registries 314. The interaction between the Gatekeeper engine 302 and the operating system 308 may additionally be indirect via other applications, such as a Strider / *AskStrider* engine 316. The Strider / *Askstrider* engine 316 underlies several troubleshooting tools, and are described more fully by Wang, et al. in "STRIDER: A Black-box State-based Approach to Change and Configuration Management and Support", in *Proceedings of Usenix Large Installation Systems Administration Conference, pp.* 159-171, October 2003, and in "AskStrider: What Has Changed on My Machine Lately?" *Microsoft Research Technical Report MSR-TR-2004-03*, January 2004, which are hereby incorporated by reference for all that they teach without exclusion of any parts thereof

In greater detail, the Gatekeeper engine 302 monitors the operating system 308 for "hooking" activity of ASEPs. The Gatekeeper engine 302 monitors from a list of known ASEPs 318. The Gatekeeper engine 302 works in conjunction with an inventory of registered software applications, such as the Add/Remove Program (ARP) service 320 in the MICROSOFT WINDOWS operating system. The Gatekeeper engine 302 also works in conjunction with a file / configuration checkpointing application that can be used to roll back the system state in the event or need of recovery from disaster. An exemplary checkpointing application is the System Restore Service 322 of the MICROSOFT WINDOWS operating system. The Gatekeeper engine 302 allows a user to selectively disable identified spyware from the computer by removing the hook between the ASEP and the identified spyware, thereby preventing the spyware from being executed automatically. Additionally, the Gatekeeper engine 302 may identify spyware by comparing known spyware signatures to those in the public registries 324. The Gatekeeper engine 302 additionally may identify spyware by comparing a current state of the machine to a previous state via Registry snapshots, and by using a file change log 325 of file system differences. By intersecting the state comparison and file change long with an auto-start trace log 326, spyware programs are identified.

Because many spyware programs are installed while browsing the internet with a web browser application 327, a Gatekeeper Browser Helper Object (BHO) 328 is provided for monitoring activity of the web browser 327. The BHO 328 records its results on a uniform resource locator (URL) trace log 330, which stores the URL and timestamp of web pages visited by the browser 327, along with the process identification number for the browser's 327 instantiation. An event log 332 is also maintained to store details of software installations, including timestamp and process identification number of the installing process.

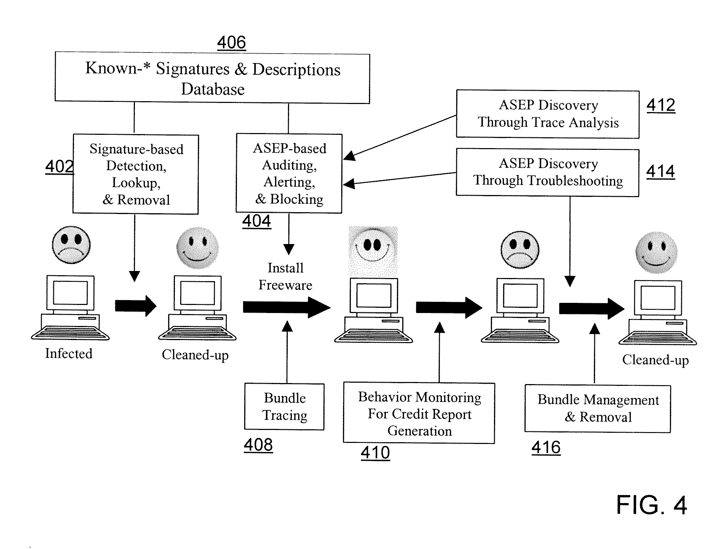

**Figure 4** illustrates a method of spyware management performed by an ASEP monitoring service such as Gatekeeper as a "life cycle", in accordance with an embodiment of the invention. In step 402, given a machine infected with spyware, a known-bad signature database and signature-based scanner / removal tool are used to remove existing spyware. Exemplary scanner / removal tools include AD-AWARE by LavaSoft and SPYBOT. In step 404, all ASEPs are continuously monitored by recording, alerting, and blocking potentially undesirable ASEP hooking operations. The signature database 406 preferably includes user-friendly descriptions of known-good and known-bad ASEP hooks to enable presentation of actionable information to the user.

If the user decides to install a freeware application after assessing the risks of bundled spyware programs (as specified, for example, in the freeware's End User License Agreement), bundle tracing in step 408 captures all components installed by the freeware and display them in as a group. The group is preferably displayed with a user-friendly name, enabling the user to manage and remove them as a unit. In step 410, the performance and reliability of the system since the bundle installation is monitored and any problems are associated with the responsible component(s). These "credit reports" provide the user with a "price tag" for the freeware functionality, enabling the user to make value/cost judgments about the freeware.

The effectiveness of the spyware management method is related to completeness of the ASEP list. In step 412, the monitoring service discovers the ASEPs of the operating system and popular frequently-run software by analyzing indirection patterns in file and Registry traces, or of other persisted state traces. Alternatively, the service scans the volatile states of a known infected machine to identify the executable file associated with the spyware, and then uses this as an index in a reverse lookup scan of the machine configuration to identify new ASEPs in step 414. The ASEP list is preferably stored on a user's computing device in a database, enabling lookup by a tool such as Gatekeeper. Alternatively, the ASEP list is stored securely on a remote computing device, and is accessed via a secure connection at the time of local scanning. In one embodiment, the ASEP list on a user's computing device is periodically updated by, for example, downloading an update from a trusted ASEP database maintenance source over a network such as the Internet. Alternatively, a user's computing device adds ASEPs to its database upon discovering previously unknown ASEPs that can be hooked by potentially harmful programs. In some embodiments, a user's computing device uploads to a trusted ASEP database maintenance source any potential new ASEPs it has identified, so that the trusted source can investigate those potential new ASEPs and add them to updates to be downloaded by other users. In a further embodiment, a user's computing device detects new hooks to previously known ASEPs, and uploads these hooks to a trusted ASEP database maintenance source.

In step 416, the user interacts with an interface to manage bundle installations. As previously discussed, some installation programs install a "bundle" of more than one software applications, each of which may install one or more ASEP hooks. The user may remove individual ASEP hooks from the bundled software to disable individual software applications, or remove all ASEP hooks to disable the entire bundle. In either case, the user does not actually cause the software components to be removed, but instead merely "unhooks" the components from their respective ASEPs, thereby preventing those components to be automatically loaded. If the user decides to re-enable the applications or the bundle, the removed ASEP hooks can simply be restored.

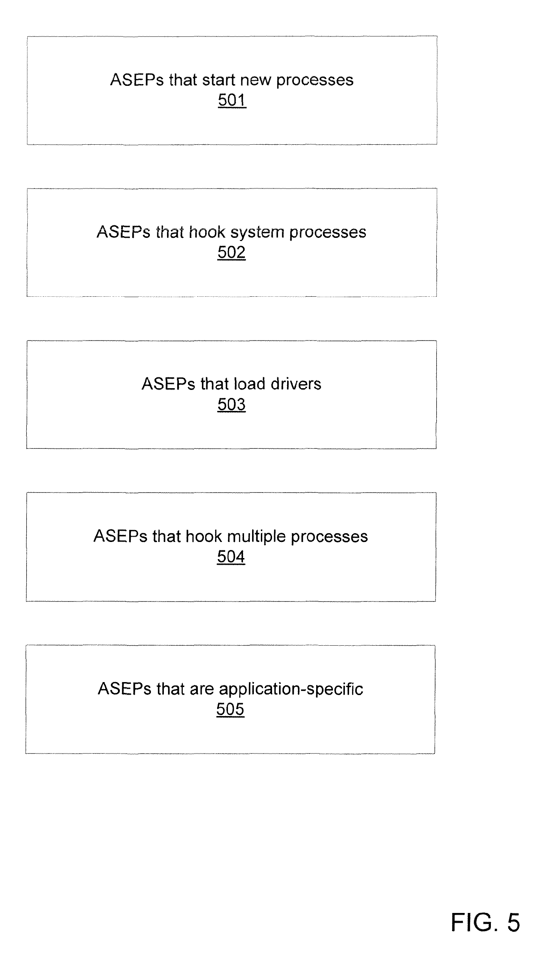

Turning to **Figure 5**, ASEPs are categorized into five different categories. The categorization provides a useful framework for discussing the detection and removal of spyware via ASEP hooks. On MICROSOFT WINDOWS platforms, most ASEPs reside in the Registry, which is a database used to store information and settings for hardware, software, users, and preferences of the computing device. Only a few ASEPs typically reside in the file system. The first category 501 are ASEPs that start new processes, such as the *HKLM\SOFTWARE\Microsoft\Windows\CurrentVersion\Run* Registry key and the *%USERPROFILE%\Start Menu\Programs\Startup* file folder. These are particularly well-known ASEP hooks for auto-starting additional processes. The second category 502 are ASEPs that hook system processes, such as *HKLM\SOFTWARE\Microsoft\Windows NT\CurrentVersion\Winlogon\Notify*, which allows a DLL to be loaded into winlogon.exe. The third category 503 are ASEPs that load drivers, such as
*HKLM\System\CurrentControlSet\Control\Class\{4D36E96B-E325-11CE-BFC1-08002BE10318}\UpperFilters* which allows loading of a keylogger driver, and *HKLM\System\CurrentControlSet\Services* allows loading of general drivers. The fourth category 504 are ASEPs that hook multiple processes, such as Winsock. Winsock allows a Layered Service Provider (LSP) DLL or a Name Space Provider (NSP) DLL to be loaded into every process that uses Winsock sockets. Another ASEP in the fourth category 504 is *HKLM\SOFTWARE\Microsoft\Windows NT\CurrentVersion\Windows\AppInit_Dlls, which* allows a DLL to be loaded into every process that links with User32.dll. The fifth category 505 are ASEPs that are application-specific. For example, *HKLM\SOFTWARE\Microsoft\Internet Explorer\Toolbar* allows a toolbar to be loaded into the MICROSOFT INTERNET EXPLORER web browser. Similarly, *HKCR\PROTOCOLS\Name-Space Handler* and *HKCR\PROTOCOLS\Filter* allow other kinds of DLLs to be loaded by INTERNET EXPLORER.

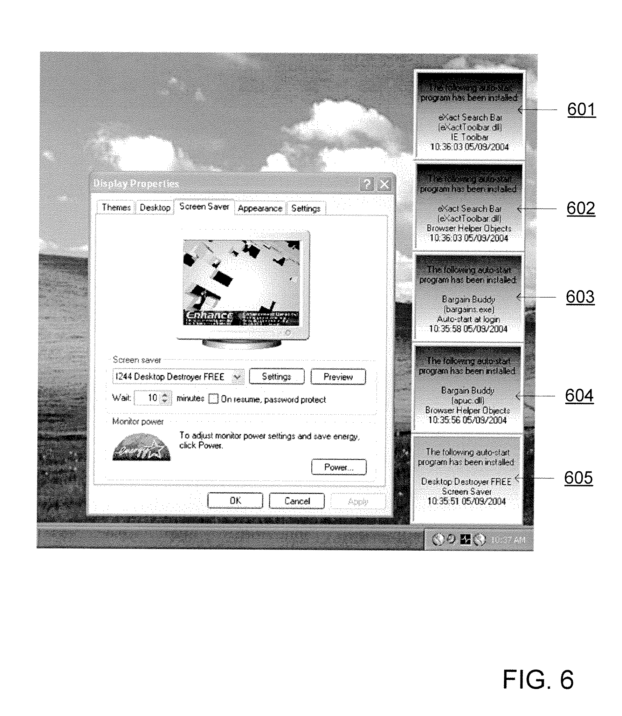

In embodiments of the invention, ASEP monitoring watches all known ASEPs for any of the following three types of changes: (1) adding a new ASEP hook; (2) modifying an existing ASEP hook; and (3) modifying the executable file pointed to by an existing ASEP hook. Each of the above changes generates an optional notification sent to the user, or forwarded to an enterprise management system for processing. Notifications for ASEP programs signed by trusted publishers can be optionally suppressed to reduce false positives. **Figure 6** shows a screenshot of a user notification alert, as used in an embodiment of the invention. During the installation of a freeware screensaver, the user is notified of five new ASEP hooks 601-605. The "Screen Saver" hook alert 605 is expected. Searching an ASEP Signatures and Descriptions Database with the information from the other four alerts 601-604 (by clicking on the alerts) reveals that they belong to *"eXact Search Bar"* and *"Bargain Buddy"*. Based on the information provided for these two pieces of software and the benefit provided by the screensaver, the user can then make informed decision about whether to keep this bundle.

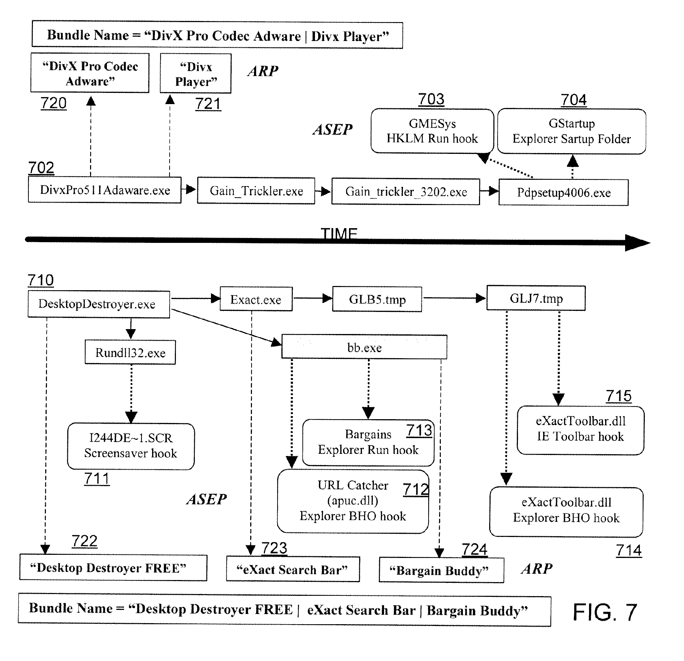

Although the multiple ASEP alerts that appear during the same installation process typically indicate that they belong to the same bundle, this time-based grouping may not be robust against concurrent installations. For example, **Figure 7** illustrates two concurrent installations of the *DivX* bundle 702 (with two **ASEP** hooks 703, 704) and the *Desktop Destroyer (DD)* bundle 710(with five **ASEP** hooks 711-715). Time-based grouping would incorrectly group all seven **ASEP** hooks in a single bundle. Embodiments of the invention, however, use a bundle tracing technique built on top of the always-on Strider Registry and file tracing. ASEP hooks created by processes belonging to the same process tree are assigned to the same bundle. If any *Add*/*Remove Programs (ARP)* entries are created by the same process tree, the concatenation of their ARP Display Names are used as the bundle name. The upper process tree defines the *DivX* bundle 702 with two ARP names 720, 721 , and the lower tree defines the *DD* bundle with three ARP names 722-724.

Any deceptive software that does not provide an ARP entry for removal will show up as a bundle with no name. For example, some software creates one ASEP hook silently at installation time with no accompanying ARP entry. Such software is therefore flagged as a potential unwanted installation.

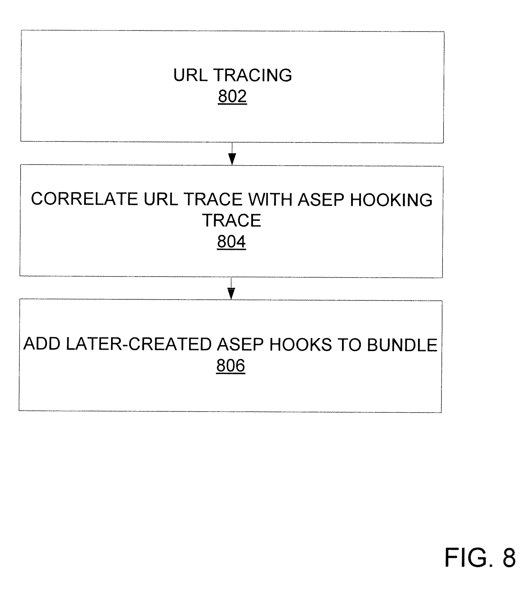

Some devious software may initially install partially, and delay the full installation until a later time to make it more difficult for the users to identify which Web site is actually responsible for installing the unwanted software. For example, after the partial installation with one ASEP hook, some software non-deterministically selects a later time and, after several reboots, finishes its installation with seven additional ASEP hooks. Embodiments of the invention use bundle tracing to capture such devious behavior as follows, as shown in **Figure 8**: First, URL tracing is performed at step 802 to correlate each Web-based installation with its source URL. Although web browser history may already record the URL and timestamp for every Web site visited, it is typically a global history for all instances of the browser, and is garbage collected after a few weeks, thereby removing information for older installations. In order to record the process ID of the web browser instance that navigated to each URL, embodiments of the invention use a customized Browser Helper Object ("BHO") so that the URL trace can be correlated with the ASEP hooking trace at step 804. The BHO records the URLs accessed, along with a timestamp of when the URL was accessed, in a URL Trace Log. By correlating the URL Trace Log entries with entries from a bundle tracing log, the source URL of Web-based installations is identified. In order to handle latent installations, bundle tracing keeps track of all the files created by each bundle. If any of the files is later instantiated to create more ASEP hooks, these additional hooks are added to the original bundle at step 806. The original bundle is determined by identifying the process or component that is installing the application, then tracing this root image name back to a bundle that added this file to the system.

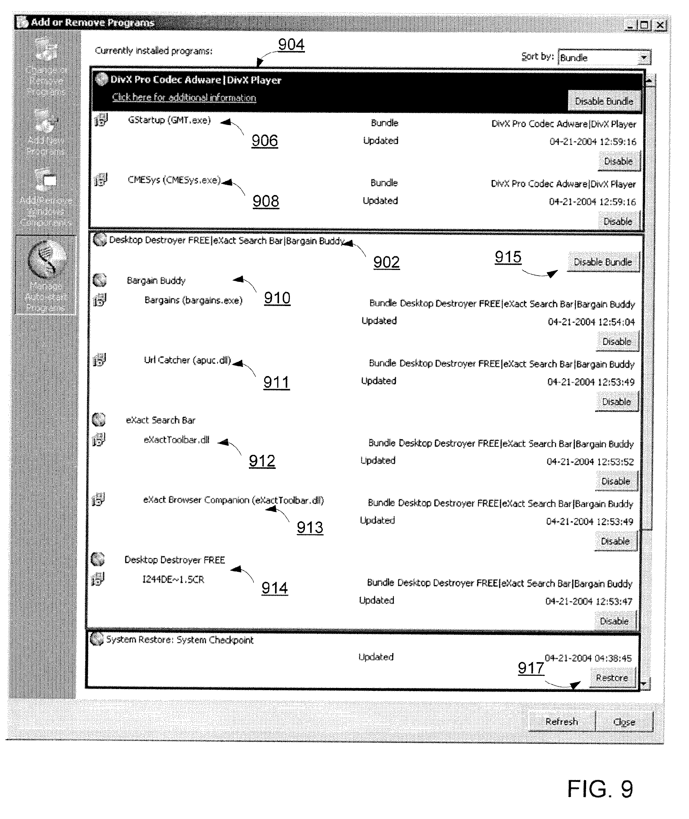

Embodiments of the invention provide a modified software inventory management application, such as the "Add/Remove Programs" interface in the MICROSOFT WINDOWS operating system, as shown in **Figure 9**. It scans all ASEPs and displays the current hooks by bundles. The user can sort them by install time to highlight newly installed bundles. It also provides three options for bundle removal/disabling. For example, the bundle name 902 clearly shows that "eXact Search Bar" and "Bargain Buddy" have been installed as part of the "Desktop Destroyer" bundle. In the example, the "DivX Pro Codec Adware |DivX Player" bundle 904 includes two ASEP hooks, GMT.exe 906 and CMESys.exe 908 that came from a common installation. The "Desktop Destroyer FREE |eXact Search Bar| Bargain Buddy" bundle 902 includes five ASEP hooks 910-914. If the user wants to remove *DesktopDestroyer*, she can click the "*Disable Bundle*" 915 button and reboot the machine. This removes all five ASEP hooks 910-914, stopping the three bundled programs from automatically starting, despite their files remaining on the machine.

Alternatively, the user can look for the three ARP names in an unmodified ARP page and invoke their respective removal programs there. Since it is not uncommon for spyware to provide unreliable ARP removal programs, the user can double-check the modified ARP interface to make sure that none of the ASEP hooks gets left over after ARP removals. The modified interface also preferably integrates with an existing System Restore function. If both removal options fail, the user can click on the *"Restore*" button 917 to roll back machine configuration to a checkpoint taken before the bundle was installed.

In addition to well-known ASEPs and documented ASEPs, embodiments of the invention discover new ASEPs through another two channels. The first channel involves troubleshooting machines with actual infections that cannot be cleaned up by a currently loaded version of Gatekeeper because the spyware programs are using unknown ASEPs. Two tools are provided for this purpose: the Strider Troubleshooter and *AskStrider,* which are described by Wang, et al. in the aforementioned references. The second channel involves analyzing Registry and file traces collected from any machine to discover new ASEPs that can potentially be hooked by future spyware. Once new ASEPs are discovered, they are added to the list of known ASEPs to increase coverage for spyware removal. The same ASEP discovery procedure can also be used by system administrators to discover ASEPs in third-party or in-house applications that do not come with a list of specified ASEPs.

*AskStrider* is an extension to a process listing tool, such as the MICROSOFT WINDOWS Task Manager, or the *ps* command in Unix. In addition to displaying the list of running processes, *AskStrider* displays the list of modules loaded by each process and the list of drivers loaded by the system. More importantly, *AskStrider* gathers context information from the local machine to help users analyze this large amount of information to identify the most interesting pieces. Such context information includes the System Restore file change log, meta-data for patch installations, and driver-device associations.

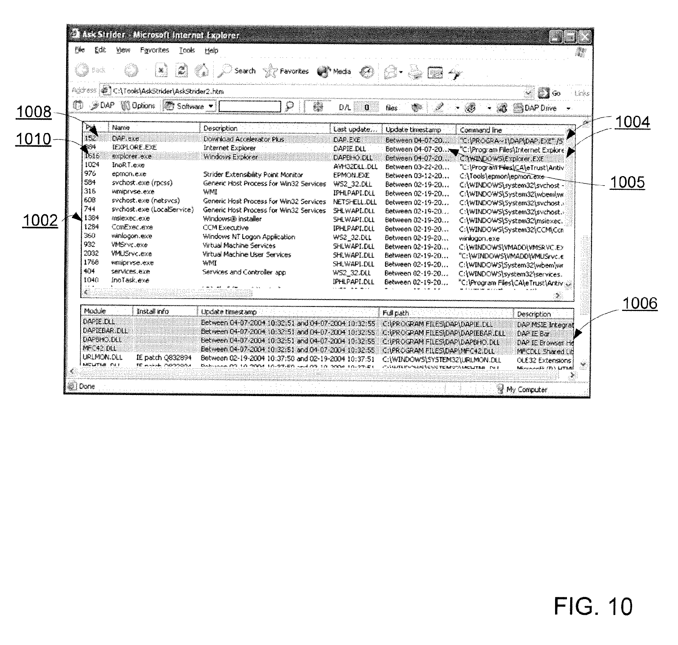

An example of using *AskStrider* for ASEP discovery, as used in an embodiment of the invention, is shown in **Figure 10,** which shows two sample screen shots of *AskStrider*. The upper pane 1002 displays the list of processes sorted by the approximate last-update timestamps of their files, according to System Restore. Files 1004 that were updated within the past week are highlighted. User-selected files 1005 in the upper pane 1002 are also highlighted, in a different color. The lower pane 1006 displays the list of modules loaded by the selected process in the upper pane, with the same time-sorting and highlighting. Additionally, if a file came from a patch, the patch ID is displayed as an indication that the file is much less likely to have come from a spyware installation.

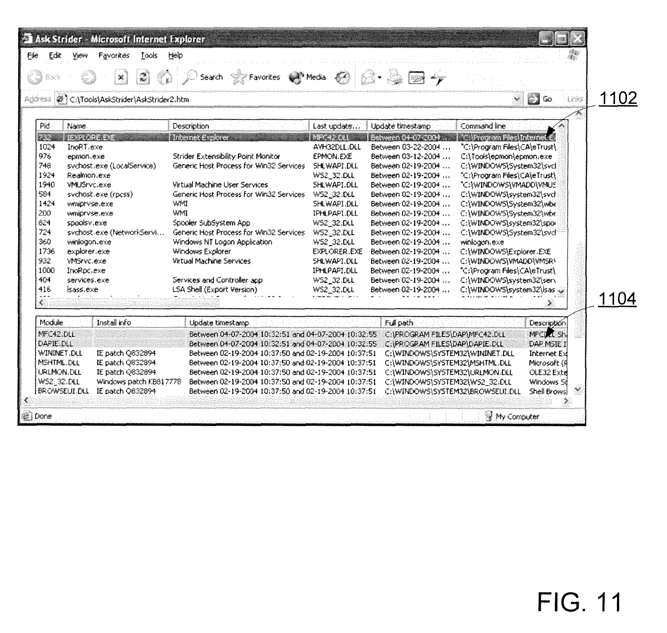

**Figures 10 and 11** also illustrate an example of how *AskStrider* is used to discover a new ASEP, in accordance with an embodiment of the invention. Figure 10 shows that, after the installation of a program, a new process *DAP.exe* 1008 was started and the browser process *iexplore.exe* 1010 was loading four newly updated DLL files from the same installation. After disabling all new **ASEP** hooks (using, for example, the modified ARP interface of Figure 9) and rebooting, *iexplore.exe* 1102 still loads two new DLLs 1104. Searching the Registry using the filename *DAPIE.dll* reveals that an application is hooking an additional ASEP under *HKCR\PROTOCOLS\Name-Space Handler*. This procedure is potentially automated by, for example, providing a button for each process/module in the *AskStrider* display; when a user clicks on a button, the reverse lookup is performed and the ASEP is displayed. This new ASEP is subsequently added to the list of known ASEPs to be monitored.

*AskStrider* is completely automatic and usually takes only one minute to run; however it only captures running processes and loaded modules at the time of its scan. If a spyware program gets instantiated through an unknown ASEP and exits before *AskStrider* is invoked *AskStrider* may not be able to capture any information revealing the unknown ASEP. The Strider Troubleshooter is therefore used in such scenarios for ASEP discovery, according to embodiments of the invention. This tool asks the user of an infected machine to select a System Restore checkpoint (of files and Registry) that was taken prior to the infection. By comparing that checkpointed state with the current infected state, the tool calculates a difference set that contains all changes made by the spyware installation. The difference set is then intersected with an "auto-start trace log" (that records every single file and Registry read/write during the auto-start process) to produce a report that necessarily contains all ASEP hooks made by the spyware.

Generally, ASEP programs: (1) appear in the auto-start trace that covers the execution window from the start of the booting process to the point when the machine finishes all initializations and is ready to interact with the user; and (2) get instantiated through an extensibility point lookup, instead of having their filenames hard-wired into other auto-start programs. Embodiments of the invention therefore discover new ASEPs by analyzing auto-start traces from any machines to identify the following indirection pattern: an executable filename is returned as part of a file or Registry query operation, followed by an instantiation of that executable file. Generally, the indirection detected falls into one of three distinct patterns. The first are ASEPs that can accommodate multiple hooks. For example, *HKLM\SOFTWARE\Microsoft\InetStp\Extensions* allows for multiple administrative extensions for the IIS server, *HKLM\SOFTWARE\Microsoft\Cryptography\Defaults\Provider* allows for multiple providers, and *HKLM\SOFTWARE\Microsoft\Windows*
*NT\CurrentVersion\Winlogon\Userinit* allows for multiple initialization programs specified in a comma-separated string. The second pattern of indirection reveals ASEPs with a single hook, such as the MICROSOFT WINDOWS EXPLORER ASEP, *HKCR\Network\SharingHandler* which appears to allow only one handler. The third indirection pattern reveals ASEPs that require an additional Class ID lookup in order to retrieve the filename. For example, every hook to the ASEP
*HKLM\SOFTWARE\Microsoft\Windows\CurrentVersion\ShellServiceObjectDelayLoad* contains a Class ID that is used in an additional Registry lookup to retrieve the executable filename from *HKCR\CLSID\<Class ID>\InProcServer32*.

Some cases may produce "false-positive" ASEPs in the sense that it is arguable whether they should be included in our list for monitoring. Embodiments of the invention allow the option of monitoring or not monitoring these cases. First, some DLL files do not export any functions and are only used as resource files to provide data; so they may not be considered ASEPs. However, they can also be considered as ASEPs if specific routines (such as a *DllMain* in the MICROSOFT WINDOWS operating system) can be added to cause code execution. Another case is organization-specific ASEPs. For example, all the machines in the same organization may run an auto-start program deployed by its IT department that exposes its own ASEPs. Obviously, such ASEPs should not be added to the global list for monitoring; but the system administrators in the organization may want to add them to their local list if they are concerned about these ASEPs being hooked.

Embodiments of the invention further provide ASEP checkpointing and difference comparison. A tool is provided that records all known ASEP hooks and ARP Registry keys, forming a checkpoint. The checkpoint is recorded either on-demand or automatically at periodic intervals. An ASEP checkpoint is created efficiently, taking only 3 to 10 seconds. Whenever a new checkpoint is taken, it is compared with the previous checkpoint to detect any changes in ASEP hooks and ARP keys. This gives approximate, time-based bundle information in a non-obtrusive manner: between any two consecutive checkpoints, there is no processing overhead.

Browser vulnerabilities that allow exploits to run arbitrary code including the installation of unwanted software exist for a variety of web browsers, including NETSCAPE NAVIGATOR and MOZILLA FIREFOX. The homepage and search page-related ASEPs of some browsers are usually stored in preference files, instead of Windows Registry. For example, there are two user preference files in the profile directory of Netscape/Mozilla: *prefs.js* (which contains automatically generated default preferences) and *user.js* (which is an optional file a user can create to override the defaults). Spyware could hijack the home page and the default search page of these browsers by altering the value of *user_pref("browser.startup.homepage", "<home page>')* and *user_pref("browser.search.defaultengine", "<search page>")* in *prefs.js.* For example, the Lop.com software has been known to hijack Netscape/Mozilla home page.

ASEPs are also found on UNIX operating systems such as Linux, AIX, and Solaris, and thus embodiments of the invention detect spyware on these operating systems, as well. ASEPs on UNIX systems can be roughly classified into four categories. The first category are the *inittab* and *rc* files, such as the file /*etc*/*inittab, which* instructs the *init* process what to do when the system is up and initializing. It typically asks *init* to allow user logons (*gettys*) and start all the processes in the directories specified by the /*etc*/*rc.d*/*rc* file and other *rc* files such as /*etc*/*rc.d*/*rc.local*, which is a place for a user (normally a user with "root" level permissions) to customize changes to the system, including loading additional daemons. The second category includes the *crontab* tool. The *cron* daemon is started from either the *rc* or the *rc.local* file, and provides task scheduling service to run other processes at a specific time or periodically. Every minute, *cron* searches /*var*/*spool*/*cron* for entries that match users in the /*etc*/*passwd* file and also searches/*etc*/*crontab* for system entries. It then executes any commands that are scheduled to run. The third category is Configuration profiles for user environment (such as .*bash* for bash shell, *.xinitrc* or *.Xdefaults* for X environment, and other profiles in /*etc*/), which are potential ASEPs. Users are usually unaware of what are loaded when they log on or start the X window. A simple script file that contains the command *"script -fq* /*tmp*/*.syslog"* could be used to hook an ASEP to record the terminal activities of the whole system or a specific user account, depending on the ASEP location. The recording is usually stored in a hidden file (i.e., a filename that begins with a ".") under the world-writable /tmp directory. The fourth category includes Loadable Kernel Modules (LKMs), which are pieces of object code that can be dynamically loaded into the kernel to provide new functionalities. Most LKM object files are by default placed in the directory /*lib*/*modules*. However, some customized LKM files could reside anywhere on the system. The programs *insmod* and *rmmod* are responsible for inserting and removing LKMs, respectively.

In view of the many possible embodiments to which the principles of the present invention may be applied, it should be recognized that the embodiments described herein with respect to the drawing figures are meant to be illustrative only and should not be taken as limiting the scope of the invention. For example, those of skill in the art will recognize that the illustrated embodiments can be modified in arrangement and detail without departing from the spirit of the invention. Although the invention is described in terms of software modules or components, those skilled in the art will recognize that such may be equivalently replaced by hardware components. Therefore, the invention as described herein contemplates all such embodiments as may come within the scope of the following claims and equivalents thereof.

## Claims

1. For use in an unwanted software detection and removal program, a method of identifying potential unwanted software, the method comprising:
monitoring a plurality of auto-start extensibility points (ASEPs) for ASEP-hook related activity; and
detecting an unwanted software application through ASEP-hook related activity.

2. The method of claim 1 wherein monitoring and detecting omit the use of known-software signatures.

3. The method of claim 1 wherein the ASEP-hook related activity comprises an executable file associating with any of the plurality of ASEPs.

4. The method of claim 1 wherein the ASEP-hook related activity comprises modifying an existing association between an executable file and any of the plurality of ASEPs.

5. The method of claim 1 wherein the ASEP-hook related activity comprises modifying an executable file associated with any of the plurality of ASEPs.

6. The method of claim 1 further comprising:
notifying a user of ASEP-hook related activity.

7. The method of claim 1 further comprising:
comparing the ASEP-hook related activity to a list of known ASEP-hook related activities; and
if the ASEP-hook related activity is not on the list, identifying as potential unwanted software at least one executable file associated with the ASEP-hook related activity.

8. The method of claim 1 further comprising:
retrieving information regarding one or more processes performing ASEP-hook related activity; and
identifying a bundle of one or more ASEP-hook related activities according to the process information of the processes performing those ASEP-hook related activities.

9. The method of claim 8 further comprising:
retrieving activity information about one or more web browser instances;
retrieving process information about one or more processes spawned by the one or more web browser instances; and
associating, according to the retrieved process information, activity information about at least one of the web browser instances with at least one process spawned by the web browser instances.

10. The method of claim 9 wherein the activity information for the web browser instances includes a log of uniform resource locators (URLs) visited by the web browser instances.

11. A user interface for assisting a computing device user with removal of unwanted software, the user interface comprising:
a list of user-selectable items including auto-start executable files installed on the user's computing device;
wherein, if an executable file in the list was installed as part of a bundle of executable files deriving from a common installation, the list displays information regarding the bundle.

12. The user interface of claim 11 further comprising a user-selectable option to disable at least one auto-start executable file associated with at least one of the user-selectable items.

13. The user interface of claim 12 further comprising a user-selectable option to disable a bundle of executable files associated with at least one of the user-selectable items.

14. The user interface of claim 12 wherein disabling auto-start executable files comprises removing at least one association between at least one auto-start executable file and at least one auto-start extensibility point (ASEP).

15. The user interface of claim 11 further comprising a user-selectable option to restore the system to a previously-stored checkpoint.

16. A method of discovering auto-start extensibility points (ASEPs) in software of a computing device, the method comprising:
executing an auto-start trace; and
detecting at least one previously unknown ASEP in the auto-start trace.

17. The method of claim 16 wherein detecting the at least one previously unknown ASEP comprises detecting an indirection pattern in the auto-start trace, wherein the indirection pattern comprises:
a file or registry query operation returning the name of an executable file; followed by an instantiation of the executable file.

18. The method of claim 16 wherein detecting the at least one previously unknown ASEP comprises:
calculating the set of differences between a current state of the computing device and a past state of the computing device; and
intersecting the set of differences with the results of the auto-start trace.

19. A computer-readable medium including computer-executable instructions facilitating the identifying of potential unwanted software, the computer-executable instructions performing the steps of:
monitoring a plurality of auto-start extensibility points (ASEPs) for ASEP-hook related activity; and
detecting an unwanted software application through ASEP-hook related activity.

20. The computer-readable medium of claim 19 wherein monitoring and detecting omit the use of known-software signatures.

21. The computer-readable medium of claim 19 wherein the ASEP-hook related activity comprises an executable file associating with any of the plurality of ASEPs.

22. The computer-readable medium of claim 19 wherein the ASEP-hook related activity comprises modifying an existing association between an executable file and any of the plurality of ASEPs.

23. The computer-readable medium of claim 19 wherein the ASEP-hook related activity comprises modifying an executable file associated with any of the plurality of ASEPs.

24. A computer-readable medium including computer-executable instructions facilitating the discovering of hooks to auto-start extensibility points (ASEPs) in software of a computing device, the computer-executable instructions performing the steps of:
storing at a first checkpoint a list of ASEP hooks known to exist on the computing device at the time of the first checkpoint's creation;
storing at a second checkpoint a list of ASEP hooks known to exist on the computing device at the time of the second checkpoint's creation; and
detecting at least one ASEP hook in the second checkpoint that is not in the first checkpoint.

25. The computer-readable medium of claim 24, the computer-executable instructions further performing the step of:
correlating the at least one detected ASEP hook with software known to have been installed on the computing device during the time interval between the first checkpoint's creation and the second checkpoint's creation.
